# EUROPEAN PATENT SPECIFICATION

(11) **EP 0 347 395 B1**
(45) Date of publication and mention of the grant of the patent: **24.03.1993**
(21) Application number: 89850144.0
(22) Date of filing: 03.05.1989
(51) Int. Cl.: B60P 7/08

(54) **Catch lifting arrangement for load binder**
Sperrklinkenhebevorrichtung für Lasthalter
Dispositif de levage de cliquet pour dispositif d'amarrage

(30) Priority: 13.06.1988 SE 8802207
(43) Date of publication of application: 20.12.1989
(73) Proprietor: Laxo Mekan Aktiebolag, S-702 21 Örebro (SE)
(72) Inventor: Persson, Ake, S-702 21 Örebro (SE)
(74) Representative: Avellan-Hultman, Olle

(56) References cited:
- EP-A- 0 049 571
- DE-A- 2 944 102
- GB-A- 308 535
- US-A- 4 706 343

## Description

The present invention generally relates to hydraulicly or pneumaticly operated binding devices having an automatic back-catch according to the preamble of claim 1. Such a device is known from SE-B-412 729 (corresponding to DE-A-2 944 102).

This known load binder comprises an elongated box constructionm mounted on the platform body of a vehicle and designed with a stretching device comprising a catch rail, which cooperates with a catch hook, which by means of a hydraulic or pneumatic, single-acting cylinder can be retracted into a larger or longer piece and be locked by engaging some of the catches in said catch rail. A rope, a cable or the like is, with one of its ends, fastened to an end of said box construction and can, with its other end, be locked in said catch hook, said rope or cable, which has been passed round said load, being stretched and binding said load against said box construction or platform body on said vehicle. The rope or cable presses the catch hook downwards into the catch groove in the catch rail and the involuntary disengagement of the catch hook from the hook groove is thereby precluded.

In order to undo the catch hook and in this way release the rope or cable from the bound load a catch lifting rail, having the same type of catch grooves and the same pitch between the catch grooves as in the catch rail, can be displaced inside the catch rail, and when the catch lifting rail is displaced in relation to the catch rail the catch is successively lifted upwards by means of the catch lifting rail, actuated by an inclined edge on the catch grooves, until the catch can slide freely on top of those plane upper surfaces, which the catch lifting rail forms jointly with the catch rail. The displacement of the catch lifting rail is done manually by actuating a handle or the like.

Due to the tension in the rope or the cable and due to the influence of the load, which often is somewhat resilient, as well as the resilience of the rope or the cable the bearing pressure of the catch against the catch grooves in the catch rail will be high, and also it is often difficult and heavy to force the catch upwards by the displacement of the catch lifting rail in relation to the catch rail.

The purpose of the present invention has been to solve the problem described above and suggest a catch lifting arrangement for an automatic back-catching binding device or load binder of the type described above, which catch lifting arrangement functions smoothly and preferably automaticly and by means of which a safe and efficient disengagement of the catch from the catch rail is attained.

This problem is solved according to the present invention by the features of the characterizing part of claim 1.

Characterizing features and advantages of the present invention are set forth in more detail in the following description, reference being made to the accompanying drawings.

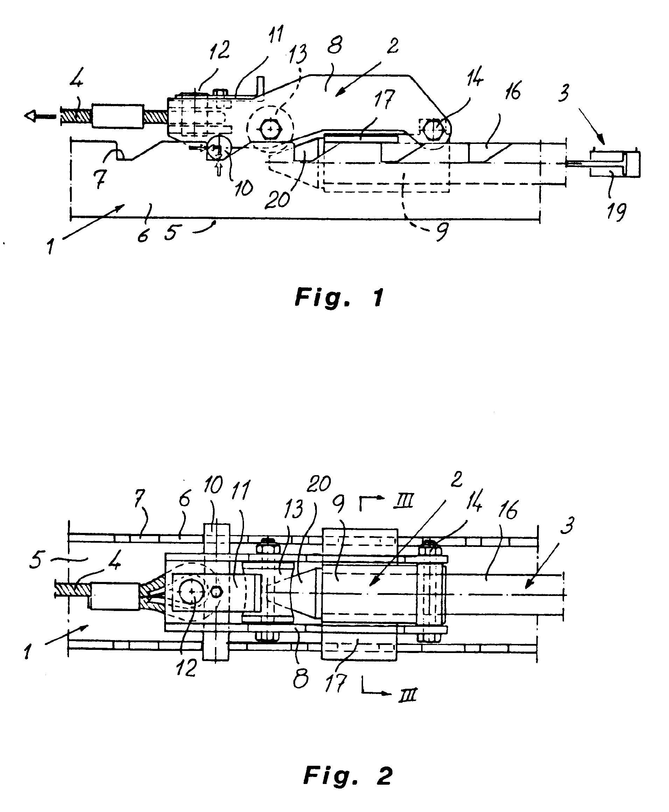

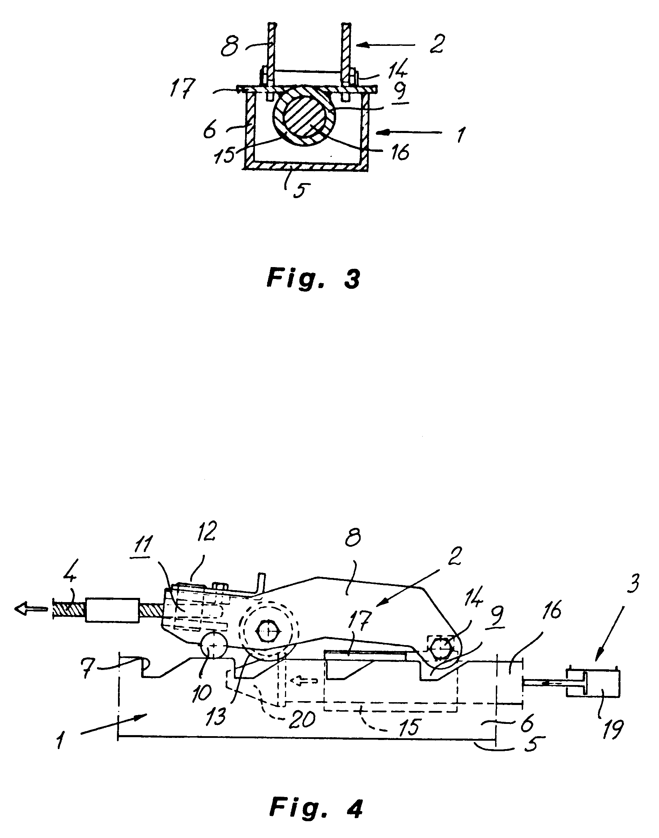

In the drawings Fig. 1 is a lateral view of an automaticly back-catching binding device having a catch lifting arrangement according to the invention in its catching position. Fig. 2 shows the device according to Fig. 1 from above; Fig. 3 shows a section along line III-III in Fig. 2; and Fig. 4 is a lateral view, in the same way as in Fig. 1, of said binding device, its catch link being rotated upwards and its catch arms being released.

The shown binding device is designed as a bloc construction, adapted to be mounted in any suitable place, in which a binding of rigid goods is required, e.g. on or below a platform body of a vehicle. Of course, said binding device can be mounted in a vertical position or in any required angle in any desired place.

Said binding device generally comprises a stationary catch rail 1, a catch link 2, which cooperates with said catch rail, as well as an actuation motor 3, designed to retract said catch link and lock it in said catch rail as well as to release the catch link from the catch rail.

Catch rail 1, which is stationarily mounted and which with its right-hand end forms a holding element for a stretching rope 4, a wire, a cable or the like, is designed as a rail having a cross-section with the shape of an inverted U and comprising a bottom 5 and two sides 6, the upper edges of which are provided with hook grooves 7 having vertical outwardly directed edges and inclined inwardly directed edges and with which catch arms in said catch link 2 can lockingly mesh.

Catch link 2 consists of two cheeks 8, which with their interior ends, i.e. the ends facing actuation motor 3, are pivotally mounted in a slipper 9 and which, at their opposite, exterior ends, are connected by means of a transversal catch arm 10, which projects in a lateral direction, in both directions outside sides 6 of catch rail 1, and which forms a fastener 11 for a stretching rope or wire 4, which with a loop is fastened in said rope fastener by means of a pin 12 or the like. In one place between said two ends said catch link is designed with a cup-shaped lifting cylinder 13, the purpose of which is to form an actuation element, designed to pivot catch link 2 upwards about pivot pin 14 in slipper 9.

Slipper 9 comprises a tube 15, which easily slides on the outside of piston rod 16, and which on its top comprises two support bars 17, designed to supportingly slide on the upper edges of sides 6 of said catch rail and which at the same time carries existing vertically directed forces, which otherwise would load said piston rod, and which prevents catch link 2 from revolving round piston rod 16.

Actuation motor 3 suitably is a hydraulic or a pneumatic motor and it is double-acting, and thus it will, when a pull is done, actuate a retraction of catch link 2 and a stretching of said rope or wire 4 and, when a push is done, actuate lifting cylinder 13 of said catch link and pivot said catch link upwards and consequently release catch arms 10 from hook grooves 7.

For this purpose slipper 9 is displaceable at least a small distance on piston rod 16 of actuation cylinder 19, which piston rod is shown schematicly, and piston rod 16 is, at its exterior end, provided with a head or a cone 20, the base of which has a larger diameter than said piston rod, a stop element being formed designed to restrain the displacement of slipper 9. Cone 20 will not, in a normal retention position, contact lifting cylinder 13, but it will, when the cylinder is discharged from any existing retention position, be able to be displaced in relation to slipper 9 and consequently in relation to catch link 2 in its entirety, and thus be able to contact and actuate lifting cylinder 13, catch link 2 in this way being pivotal upwardly round pivot pin 14 and catch arms 10 being released from hook grooves 7, subsequent to which catch link 2 and rope 4, which is fastened to it, can be released or removed from the load binder in order to disengage said rope from the bound load.

Fig. 4 illustrates the situation exactly when catch link 2 has been pivoted upwardly and catch arms 10 have been released from their hook grooves 7 and catch link 2 has started its displacement movement out of the load binder.

When a retraction of catch link 2 and a stretching of rope 4 take place, the base or head of cone 17 will force slipper 9 in the direction of cylinder 19, and because rope 4 actuates said catch link with at least some downwardly directed force vector catch arms 10 will successively slide down into a hook groove 7 and then into a following hook groove 7, until said rope is sufficiently stretched, subsequent to which cylinder 19 can be disconnected and said catch link is locked, catch arms 10 being positioned in those hook grooves 7, which finally have been occupied. Catch arms 10 suitably are cylindric having a circular cross-section in order to facilitate the downwardly directed entry of said arms into hook grooves 7 in catch rail 1 as well as the upwardly directed discharge of the pins from said grooves.

It is implied that the description above and the embodiment of the invention shown in the drawings only are illustrative examples, and that various alternatives and modifications can be included in the scope of protection set forth in the following patent claims.

## Claims

1. A binding device having an automatic back-catch and a catch lifting arrangement for said back-catch and comprising a stationary catch rail (1) having hook grooves (7) in its upper portions, a catch link (2), which is slidable in relation to said catch rail (1) and which is provided with catch arms (10), designed to slide down into and automaticly back-catch said catch link (2) in relation to said catch rail, and in which said catch link (2) forms a fastener for a stretching rope or a wire (4) in order to bind a load in relation to said stationary catch rail (1), as well as having an actuation motor (3) for said catch link (2), which actuation motor (3) is provided with a piston having a piston rod (16), **characterized** in that said catch link (2), with its end facing said actuation motor (3), is pivotably (14) mounted in a slipper (9), which is slidably mounted on the piston rod (16) of said actuation motor (3), in that said catch link (2), in a position at a distance from the pivot pin (14) in said slipper (9), is provided with a lifting element (13), and in that said piston rod (16) of said actuation motor (3), in its free end, is provided with a head or a cone (20), designed to be able to actuate said lifting element (13) and attain a rotation upwards of said catch link (2) about its pivot pin (14) and in this way a release of said catch arms (10) of said catch link (2) from said hook grooves (7) of said catch rail (1).

2. A binding device according to claim 1, **characterized** in that said actuation motor (3) is a double-acting hydraulic or penumatic piston-cylinder-motor, designed to, when it is pulling, attain a retraction of said catch link and a stretching of said stretching rope (4), and, when it is pushing, attain a positive discharge of said piston rod (16) and an actuation of said lifting element (13) of said catch link by means of said head or cone (20).

3. A binding device according to claim 1 or 2, **characterized** in that said cone (20), with its base or head, has a larger diameter than said piston rod (16), said cone forming a stop, which prevents said slipper (9) from sliding off said piston rod (6).

4. A binding device according to claim 1, 2 or 3, **characterized** in that said slipper (9), which is displaceably mounted on said piston rod (16), is designed with support bars (17), which extend outwards, beyond the upper edges of the sides (6) of said catch rail (1), which form a support for said piston rod (16) and which prevent said catch link (2) from turning about the axis of said piston rod (16).

5. A binding device according to any of the preceding claims, **characterized** in that said lifting element in said catch link (2) comprises a rotary cylinder (13).

6. A binding device according to claim 5, **characterized** in that said lifting cylinder (13) of said catch link has a concave or a diabolo shape with essentially the same bending radius as said actuation cone (20).

7. A binding device according to any of the preceding claims, **characterized** in that said catch arms (10) of said catch link (2) form cylindrical projecting pins having a circular cross-section.

## Patentansprüche

1. Haltevorrichtung mit einer automatischen Gegen-Sperrklinke und einer Sperrklinkenhebeanordnung für die Gegen-Sperrklinke sowie mit einer stationären Klinkenschiene (1), die Hakennuten (7) in ihren oberen Abschnitten aufweist, einem Klinkenhebel (2), der relativ zur Klinkenschiene (1) verschieblich ist und Klinkenarme (10) aufweist, die nach unten in die Klinkenschiene gleiten und relativ zu dieser den Klinkenhebel (2) automatisch gegen-fangen, und wobei der Klinkenhebel (2) einen Befestiger für ein Spannseil oder einen Draht (4) bildet, um eine Last relativ zur stationären Klinkenschiene (1) festzubinden, und mit einem Betätigungsmotor (3) für den Klinkenhebel, der einen Kolben mit einer Kolbenstange (16) aufweist, dadurch gekennzeichnet, daß der Klinkenhebel (2) mit seinem gegen den Betätigungsmotor (3) weisenden Ende schwenkbar (14) in einem Gleitstück (9) montiert ist, welches verschieblich auf der Kolbenstange (16) des Betätigungsmotors (3) sitzt, daß der Klinkenhebel (2) an einer Stelle im Abstand von dem im Gleitstück (9) angeordneten Schwenkstift (14) mit einem Hubelement (13) versehen ist und daß die Kolbenstange (16) des Betätigungsmotors (3) an ihrem freien Ende einen Kopf oder Konus (20) aufweist, der das Hubelement (13) betätigen und eine Aufwärtsdrehung des Klinkenhebels (2) um dessen Schwenkstift (14) sowie auf diese Weise eine Freigabe der Klinkenarme (10) des Klinkenhebels (2) von den Hakennuten (7) der Klinkenschiene (1) bewirken kann.

2. Haltevorrichtung nach Anspruch 1, dadurch gekennzeichnet, daß der Betätigungsmotor (3) ein doppelwirkender hydraulischer oder pneumatischer Kolben-Zylinder-Motor ist, der beim Ziehen ein Zurückziehen des Klinkenhebels und ein Spannen des Spannseils (4) bewirkt, während er beim Schieben eine zwangsläufige Entlastung der Kolbenstangen (16) und eine Betätigung des Hubelements (13) des Klinkenhebels mittels des Kopfes oder Konus (20) hervorruft.

3. Haltevorrichtung nach Anspruch 1 oder 2, dadurch gekennzeichnet, daß der Konus (20) an seiner Basis bzw. seinem Kopf einen größeren Durchmesser als die Kolbenstange (16) aufweist, wobei er einen Anschlag bildet, der das Gleitstück (9) am Abgleiten von der Kolbenstange (16) hindert.

4. Haltevorrichtung nach Anspruch 1, 2 oder 3, dadurch gekennzeichnet, daß das Gleitstück (9), welches verschieblich auf der Kolbenstangen (16) sitzt, mit Tragstangen (17) versehen ist, die sich nach außen über die Oberkanten der Seiten (6) der Klinkenschiene (1) hinaus erstrecken, eine Abstützung für die Kolbenstange (16) bilden und den Klinkenhebel (2) an einer Drehung um die Achse der Kolbenstangen (16) hindern.

5. Haltevorrichtung nach einem der vorhergehenden Ansprüche, dadurch gekennzeichnet, daß das Hubelement des Klinkenhebels (2) einen drehbaren Zylinder (13) umfaßt.

6. Haltevorrichtung nach Anspruch 5, dadurch gekennzeichnet, daß der Hubzylinder (13) des Klinkenhebels eine konkave oder diaboloartige Form mit im wesentlichen demselben Biegeradius wie der Betätigungskonus (20) aufweist.

7. Haltevorrichtung nach einem der vorhergehenden Ansprüche, dadurch gekennzeichnet, daß die Klinkenarme (10) des Klinkenhebels (2) zylindrische, vorspringende Stifte mit kreisförmigen Querschnitt bilden.

## Revendications

1. Dispositif d'amarrage possédant un cliquet ou dispositif antiretour automatique et un système de levage de cliquet pour décliqueter ce cliquet et comprenant un rail-crémaillère (1) stationnaire comportant des crans (7) dans ses parties supérieures, un étrier de cliquet (2) disposé coulissant par rapport à ce rail-crémaillère (1) et pourvu de bras de cliquet (10) destinés à glisser vers le bas dans les crans et bloquer ainsi automatiquement l'étrier de cliquet (2) par rapport au rail-crémaillère, dispositif dans lequel l'étrier de cliquet (2) forme un élément de fixation pour une corde ou un fil de tension (4) servant à amarrer un chargement par rapport au rail-crémaillère (1) stationnaire, et qui possède en plus un moteur (3), pourvu d'un piston solidaire d'une tige de piston (16), pour manoeuvrer l'étrier de cliquet (2),
caractérisé en ce que l'étrier de cliquet (2) est articulé (14) par son extrémité dirigée vers le moteur de manoeuvre (3) dans une coulisse (9) montée coulissante sur la tige de piston (16) du moteur (3), en ce que l'étrier de cliquet (2) est pourvu d'un élément de levage (13) à un endroit espacé de l'axe d'articulation (14) dans la coulisse (9), et que la tige de piston (16) du moteur de manoeuvre (3) est pourvue, à son extrémité libre, d'une tête ou d'un cône (20) conçu pour pouvoir actionner l'élément de levage (13) et produire ainsi la rotation vers le haut de l'étrier de cliquet (2) autour de son axe d'articulation (14), de manière à dégager les bras de cliquet (10) de l'étrier (2) des crans (7) du rail-crémaillère (1).

2. Dispositif d'amarrage selon la revendication 1, caractérisé en ce que le moteur de manoeuvre (3) est un vérin hydraulique ou pneumatique à double effet, qui est conçu pour produire la rétraction de l'étrier de cliquet et la tension de la corde de tension (4) lorsqu'il exerce une traction et pour produire l'extension de la tige de piston (13) et l'actionnement de l'élément de levage (13) de l'étrier de cliquet au moyen de la tête ou du cône (20) lorsqu'il exerce une poussée.

3. Dispositif d'amarrage selon la revendication 1 ou 2, caractérisé en ce que la base ou tête du cône (20) possède un plus grand diamètre que la tige de piston (16), de manière que le cône forme un élément d'arrêt qui empêche la coulisse (9) de glisser de la tige de piston (16).

4. Dispositif d'amarrage selon la revendication 1, 2 ou 3, caractérisé en ce que la coulisse (6), montée mobile sur la tige de piston (16), est munie de barres d'appui (17) s'étendant vers l'extérieur au-delà des bords supérieurs des ailes (6) du rail-crémaillère (1), barres d'appui qui forment un support pour la tige de piston (16) et empêchent l'étrier de cliquet (2) de tourner autour de l'axe de la tige de piston (16).

5. Dispositif d'amarrage selon l'une quelconque des revendications précédentes, caractérisé en ce que l'élément de levage dans l'étrier de cliquet (2) est constitué par un cylindre rotatif (13).

6. Dispositif d'amarrage selon la revendication 5, caractérisé en ce que le cylindre de levage (13) de l'étrier de cliquet possède une forme concave ou en diabolo, avec un rayon de courbure qui est essentiellement le même que celui du cône d'actionnement (20).

7. Dispositif d'amarrage selon l'une quelconque des revendications précédentes, caractérisé en ce que les bras de cliquet (10) de l'étrier de cliquet (2) forment des tiges cylindriques saillantes de section droite circulaire.
